Europäisches Patentamt

European Patent Office

Office européen des brevets

(11) Publication number: **0 196 427**
**B1**

(12) **EUROPEAN PATENT SPECIFICATION**

(45) Date of publication of patent specification: **23.08.89**

(21) Application number: **86101791.1**

(22) Date of filing: **13.02.86**

(51) Int. Cl.⁴: **A 01 B 71/06, A 01 B 59/042**

(54) **Implement attachable to a tractor.**

(30) Priority: **05.03.85 GB 8505578**

(43) Date of publication of application:
**08.10.86 Bulletin 86/41**

(45) Publication of the grant of the patent:
**23.08.89 Bulletin 89/34**

(84) Designated Contracting States:
**AT BE CH DE FR GB LI NL SE**

(56) References cited:
**DE-B-1 117 950**
**FR-A-2 365 945**
**FR-A-2 395 424**
**FR-A-2 415 230**
**GB-A- 972 445**
**NL-A-8 100 145**
**NL-A-8 100 145**
**US-A-2 605 853**
**US-A-3 427 824**
**US-A-3 908 398**

(73) Proprietor: **DEERE & COMPANY**
**1 John Deere Road**
**Moline Illinois 61265 (US)**

(72) Inventor: **Franet, Roger**
**22, Rue Edouard Branly**
**F-57200 Sarreguemines (FR)**
Inventor: **Lamsfuss, Uwe**
**Lessingstrasse 4**
**D-5653 Leichlingen 1 (DE)**

(74) Representative: **Collins, Geoffrey Stainton et al**
**c/o Reddie & Grose 16 Theobalds Road**
**London WC1X 8PL (GB)**

## Description

This invention relates to an implement which has a drawbar attachable to lower links of a tractor and which has a drive line for transmitting power from the tractor to the implement with a primary forward drive shaft for connection to the tractor, a secondary rearward drive shaft for connection to the implement, and a double cross bearing universal joint therebetween.

Power from an agricultural tractor to its trailed implement, e.g. a mower-conditioner, is usually transmitted by way of a long drive line connected at its forward end to a power take-off of the tractor and at its rearward end to a transmission unit on the mower-conditioner. In one arrangement the drive line partly overlies and partly underlies a pivoted drawbar or tongue of the mower-conditioner when at the straight ahead position, and is in two main portions (i.e. a short forward shaft and a long rearward shaft) which are connected via an intermediate shaft journalled in bearings on a support attached to the drawbar. The connections of the two shafts are by way of universal joints.

In service, when the tractor has to turn between passes over the crop, the working angle of these joints is relatively large, e.g. 45 degrees. The larger the angle under load conditions the lower is the life of the power line due to wear at the universal joint cross bearings. At 45 degrees wear is significant and it is economically undesirable to run the implement under load at such an angle.

To overcome this problem, two solutions are offered in arrangements of drive lines currently being marketed. The first uses a swivel gearbox coupled to a short forward shaft (mentioned above) and to a belt drive (instead of the longer rearward shaft also mentioned above). Although the working angle of such a design can be large without undue wear, the cost of the gearbox is somewhat high and a shaft drive is generally to be preferred over a belt drive for reasons of reliability. The second arrangement avoids employing a belt drive by using a further swivel gearbox at the implement end of the drive line, with a conventional rearward shaft connecting the gearboxes. This certainly provides a robust drive, but clearly the cost is high.

In GB-A-2 012 918 a drive line between a tractor and its trailed implement has been proposed which consists of a primary shaft linked to a secondary shaft via a wide angle universal joint which is a double Hooke's joint provided with an inner double yoke and two outer yokes. Each outer yoke has a pair of bearings receiving a pair of the trunnions of a joint cross whilst the remaining pair of trunnions of the cross is received in a pair of bearings of the associated inner yoke. Hence the joint is a double cross bearing joint. The primary shaft is connected to the tractor and the secondary shaft to the implement. It is said that in practice angles of up to 90° can be used between the tractor and implement during a tight turn.

In US-A-3 427 824 a drive line for general application is disclosed which has a train of Cardan joints. In particular, a primary drive shaft is connected by way of five universal joints to a secondary drive shaft. The primary shaft is connected by one of these joints to an intermediate shaft which is connected to another of the joints which is rigidly connected to a neighbouring joint which in turn is connected through a shaft to a further similar pair of rigidly connected joints the second of which is connected to the secondary shaft. These two pairs of rigidly connected joints can be regarded as two double cross bearing universal joints. A bearing, mounted on a bracket fixed to a rigid support, is provided for the intermediate shaft.

However, not only is an efficient drive required for tight turns, but a robust and simple arrangement is desirable for attaching the drawbar of the implement to the lower links of the tractor, and the present invention is concerned with a combination of such a drive and arrangement and is also concerned with a drive which copes well with power transmission through large angles in turns and is well mounted.

According to the present invention the drawbar is attachable to the tractor by a yoke which is connected to the forward end of the drawbar by a pair of supports rigid one with the other and disposed at right angles one to the other, one support having a vertical pivot connection to the forward end of the drawbar, and the other support being channel-shaped and receiving the yoke in the open end of the channel and having a horizontal pivot connection thereto, the primary shaft is connected by a universal joint to a first intermediate shaft which is connected to a double cross bearing universal joint which is connected to a shaft which is connected to another double cross bearing universal joint which is connected to a second intermediate shaft which is connected by a universal joint to the secondary shaft, the drive line is supported in bearings at the intermediate shafts and the bearings are respectively supported by the drawbar and yoke.

Where the words "vertical" and "horizontal" are used it is to be assumed that the implement and tractor are on level ground.

Within the present inventive concept, in an implement as defined in the opening paragraph of this specification and in which the primary shaft is connected to the double cross bearing universal joint, the drawbar is attachable to the tractor by a yoke which is connected to the forward end of the drawbar by a pair of supports rigid one with the other and disposed at right angles one to the other, one support having a vertical pivot connection to the forward end of the drawbar, and the other support being channel-shaped and receiving the yoke in the open end of the channel and having a horizontal pivot connection thereto, the universal joint is connected to an intermediate shaft which is connected to another double cross bearing universal joint which is connected to the secondary shaft, the drive line is supported in a bearing at the intermediate shaft, and the bearing is supported by the drawbar and pivots about the said vertical pivot connection.

The inventive concept includes a tractor and implement combination in which the implement is according to the present invention.

Embodiments of the invention will now be described with reference to the accompanying diagrammatic drawings in which:

Figure 1 shows in plan an agricultural tractor and pulled implement;

Figure 2 is a side view of a first embodiment of a drive line for transmission of power between the tractor and implement of Figure 1;

Figure 3 is a plan view from below of the drive line of Figure 2, but in a position at which the tractor is at right angles to the implement;

Figure 4 is a side view of a second embodiment of a drive line for transmission of power between the tractor and implement of Figure 1;

Figure 5 is a plan view from below of the drive line of Figure 4; and

Figure 6 is a plan view from below of the drive line of Figure 5, but in a position at which the tractor is at right angles to the implement.

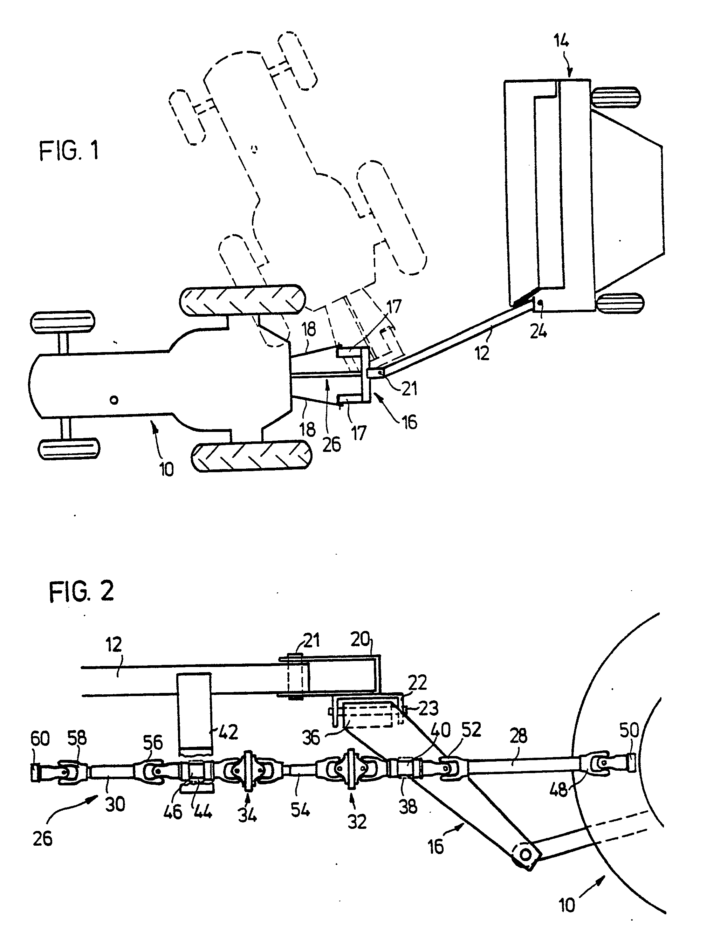

In Figure 1 a tractor 10 is connected by way of a drawbar (or tongue) 12 to an implement 14 which in the present instance is a mower-conditioner. At its forward end the drawbar 12 supports a U-shaped yoke 16 of which the arms 17 of the "U" are attached to lower links 18 of a standard 3-point hitch of the tractor and so are aligned with the latter's fore-and-aft direction. The yoke 16 is suspended from two channel-shaped supports 20 and 22 which are rigidly attached to each other at right angles with support 20 above support 22 and which are connected to the drawbar 12 and yoke 16 respectively by vertical pivot pin 21 and horizontal pivot pin 23 (shown for example in Figure 2). The yoke thus has two degrees of freedom of movement relative to the drawbar 12. At its rearward end, the drawbar 12 is connected at pivot 24 to the left hand side of the implement 14.

The disposition of the tractor 10 and mower-conditioner 14 indicated in full lines in Figure 1 is the normal working position which is used as the implement 14 is pulled behind, and somewhat to one side of, the tractor in a pass over a grass crop. The tractor 10 is turned at the end of one pass to be aligned for the next pass, and the tractor position at the turn is shown in broken lines, the fore-and-aft direction of the tractor being at right angles to the drawbar 12. power is transmitted from the tractor 10 to the implement 14 by way of a drive line 26 which for the major part of its length underlies the drawbar 12.

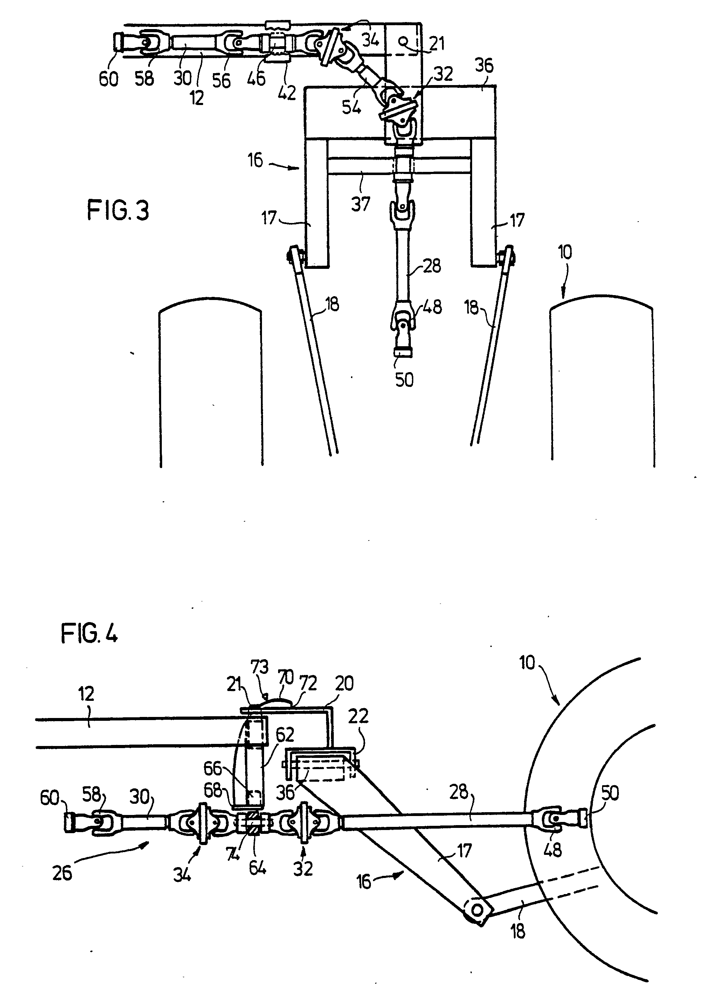

In the first embodiment of the drive line 26 shown in Figures 2 and 3 the main components are a forward primary shaft 28, a rearward secondary shaft 30, and two connected double cross bearing constant velocity universal joints 32 and 34 between the shafts 28 and 30. The secondary shaft 30 is illustrated as being short for convenience in the drawing, but in reality it is about double the length of the primary shaft 28. Parallel to cross beam 36 of the yoke 16 there is a second beam 37 on which is mounted a support bearing 38 for an intermediate shaft 40 connecting the primary shaft 28 to the double cross bearing constant velocity joint 32. A second support for the drive line 26 is provided by a downwardly extending channel bracket or sling 42 (shown partially broken away) on the drawbar 12, and a support bearing 44 for an intermediate shaft 46 connecting the joint 34 to the secondary shaft 30 is disposed on the underside of the base of the channel. Double cross bearing constant velocity joints are readily available and so will not be described.

In more detail, starting at the forward tractor end of the drive line 26, the primary shaft 28 is connected through a universal joint 48 to a coupling 50 for a power take-off shaft (not shown) of the tractor. At its rearward end the primary shaft 28 is attached, via a universal joint 52, to the intermediate shaft 40 which in turn is connected to the double cross bearing joint 32 which is connected through a shaft 54 to the other double cross bearing joint 34 and thence to the intermediate shaft 46. Finally, the shaft 46 is connected, via a universal joint 56, to the secondary shaft 30 which is connected, through yet another universal joint 58, to a coupler 60 to the input (not shown) on the implement 14.

Figure 2 shows the drive line 26 in its normal working position corresponding to that in full lines in Figure 1, whilst Figure 3 illustrates the position which the drive line assumes when the tractor is in the broken line position at turn around between passes. It will readily be seen that if the implement is to continue functioning at turn around, then the power must turn through a total of 90°. With the arrangement illustrated the power is taken firstly through a working angle of 22 1/2° on the input side of the double cross bearing universal joint 32 and through a further 22 1/2° on the output side of the joint. Similarly at the joint 34 the power undergoes successively two working angle changes of 22 1/2°. Since the implement works only perhaps 5 to 10% of its total operating time at turn around and the angle involved is only 22 1/2° a significant gain in reliability when using full power on the turn can be achieved. Additionally the arrangement is compact and so there is no fouling of neighbouring components, for example the wheels, during transportation.

Turning now to the second embodiment of a drive line as shown in Figures 4 to 6, similar parts have similar reference numerals as in Figures 2 and 3. This is a more compact arrangement, the drive line being supported only at one point between its ends. Thus a downwardly extending bracket 62 in the form of a channel or sling is fixed to the drawbar 12 at the pivot pin 21. A double support bearing 64 is attached below the base of the channel bracket 62 and is mounted for movement with a vertical pivot post 66 extending through the base and disposed coaxially with pivot pin 21.

A horizontal lever arm 68 is rigidly attached to the pivot post 66, and a Bowden-type cable 70 is connected to the free end of the arm 68 and secured to a point 72 on the support 20 with the outer (tube) part of the cable 70 secured at various points, e.g. at point 73. In this second example the support 20 is L-shaped in cross section whereas in the first example (Figures 2 and 3) as already mentioned it is channel-shaped, whilst in both examples the support 22 is channel-shaped. The cable is so arranged as to cause movement of the arm 68 and hence of the support bearing 64 through an angle which is half the angle through which the support 20 and the yoke 16 turn either clockwise or anti-clockwise.

The drive line 26 in the second embodiment consists (starting from the tractor end and moving rearwardly) of the coupling 50, the primary shaft 28, the double cross bearing joint 32, an intermediate shaft 74, the double cross bearing joint 34, the secondary shaft 30 and finally the coupling 60.

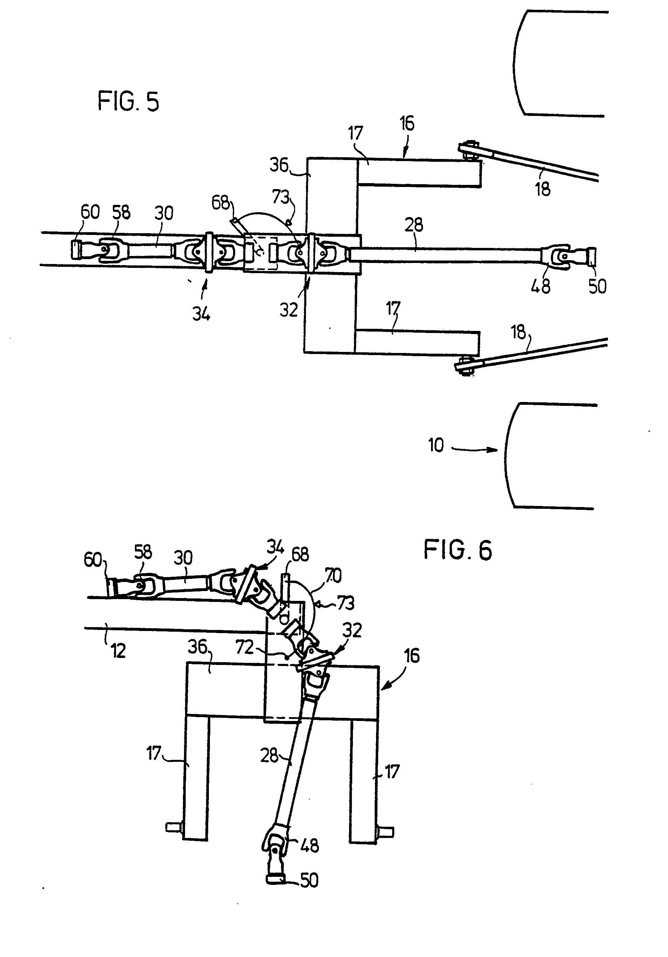

From Figure 6 it will be seen that, at turn around, when the tractor 10 is at an angle of 90° to the drawbar 12 the support bearing 64 has been turned, as explained above, through 45°. Again, as in the first example, the power undergoes successively two working angle changes of 22 1/2° at the joints 32 and 34 respectively.

Although not illustrated, the supports 20 and 22 can simply consist of the respective arms of an L-shaped rod one arm of which extends vertically upwardly through the drawbar 12 and the other of which extends horizontally through the cross beam 36 of the yoke 16, the pivotal movement being as already described.

In some applications, one of the joints 32 and 34 may be a single cross bearing universal joint, but for efficient power transmission through large angles in tight turns it is desirable to employ at least two such joints in the drive line.

## Claims

1. An implement which has a drawbar (12) attachable to lower links (18) of a tractor (10) and which has a drive line (26) for transmitting power from the tractor to the implement with a primary forward drive shaft (28) for connection to the tractor, a secondary rearward drive shaft (30) for connection to the implement, and a double cross bearing universal joint (32) therebetween characterised in that the drawbar (12) is attachable to the tractor (10) by a yoke (16) which is connected to the forward end of the drawbar by a pair of supports (20, 22) rigid one with the other and disposed at right angles one to the other, one support (20) having a vertical pivot connection (21) to the forward end of the drawbar (12), and the other support (22) being channel-shaped and receiving the yoke (16) in the open end of the channel and having a horizontal pivot connection (23) thereto, the primary shaft (28) is connected by a universal joint (52) to a first intermediate shaft (40) which is connected to a double cross bearing universal joint (32) which is connected to a shaft (54) which is connected to another double cross bearing universal joint (34) which is connected to a second intermediate shaft (46) which is connected by a universal joint (56) to the secondary shaft (30), the drive line (26) is supported in bearings (38, 44) at the intermediate shafts (40, 46), and the bearings (38, 44) are respectively supported by the drawbar (12) and yoke (16).

2. An implement which has a drawbar (12) attachable to lower links (18) of a tractor (10) and which has a drive line (26) for transmitting power from the tractor to the implement with a primary forward drive shaft (28) for connection to the tractor, a secondary rearward drive shaft (30) for connection to the implement, and a double cross bearing universal joint (32) therebetween connected to the primary shaft characterised in that the drawbar (12) is attachable to the tractor (10) by a yoke (16) which is connected to the forward end of the drawbar by a pair of supports (20, 22) rigid one with the other and disposed at right angles one to the other, one support (20) having a vertical pivot connection (21) to the forward end of the drawbar (12), and the other support (22) being channel-shaped and receiving the yoke (16) in the open end of the channel and having a horizontal pivot connection (23) thereto, the universal joint (32) is connected to an intermediate shaft (74) which is connected to another double cross bearing universal joint (34) which is connected to the secondary shaft (30), the drive line (26) is supported in a bearing (64) at the intermediate shaft (74), and the bearing (64) is supported by the drawbar (12) and pivots about the said vertical pivot connection (21).

3. An implement according to claim 2 characterised in that the bearing (64) is rigidly attached to a lever (68), and a cable (70) is connected between the lever (68) and the yoke (16) so that it moves the lever through half the angle through which the yoke moves.

4. An implement according to any preceding claim characterised in that the implement is a mower-conditioner (14).

5. A tractor and implement combination characterised in that the implement is in accordance with any preceding claim.

## Patentansprüche

1. Arbeitsgerät mit einer Zugstange (12), die mit den unteren Verbindungsgliedern (18) eines Schleppers (10) verbindbar ist, der einen Antriebszug (26) zum Übertragen von Antriebskraft von dem Schlepper zu dem Gerät mit einer primären vorderen Antriebswelle (26) für den Anschluß an den Schlepper, einer sekundären Antriebswelle (30) für die Verbindung mit dem Gerät und mit einer zwischen diesen angeordneten Doppelkreuzgelenk-Universalkupplung (32) aufweist, dadurch gekennzeichnet, daß die Zugstange (12) an dem Schlepper (10) durch ein Joch (16) anbringbar ist, das mit dem vorderen Ende der Zugstange über zwei Stützglieder (20, 22) verbunden ist, die starr und unter Bildung eines rechten Winkels miteinander verbunden sind, von denen ein Stützglied (20) eine vertikale Schwenkverbindung (21) für das vordere Ende der Zugstange aufweist und das andere Stützglied (22) kanalförmig ausgebildet ist, in dem vorderen Ende des Kanals das Joch (16) aufnimmt und für dieses eine horizontale Schwenkverbindung (23) aufweist, wobei die primäre Welle (28) durch eine Universalkupplung (52) mit einer ersten Zwischenwelle (40) verbunden ist, die ihrerseits mit der Doppelkreuzgelenk-Universalkupplung (32) verbunden ist, welche mit einer weiteren Welle (54) verbunden ist, die mit einer weiteren Doppelkreuzgelenk-Universalkupplung (34) verbunden ist, welche mit einer zweiten Zwischenwelle (46) verbunden ist, die schließlich durch eine Universalkupplung (56) mit der sekundären Welle (30) verbunden ist, und wobei der Antriebszug (26) in Lagern (38, 44) im Bereich der Zwischenwellen (40, 46) unterstützt ist und die Lager (38, 44) jeweils von der Zugstange (12) bzw. dem Joch (16) unterstützt werden.

2. Antriebsgerät mit einer Zugstange (12), die mit den unteren Verbindungsgliedern (18) eines Schleppers (10) verbindbar ist, der einen Antriebszug (26) zum Übertragen von Antriebskraft von dem Schlepper zu dem Gerät mit einer primären vorderen Antriebswelle (26) für den Anschluß an den Schlepper, einer sekundären Antriebswelle (30) für die Verbindung mit dem Gerät, und mit einer zwischen diesen angeordneten Doppelkreuzgelenk-Universalkupplung (32) aufweist, die mit der primären Welle verbunden ist, dadurch gekennzeichnet, daß die Zugstange (12) an dem Schlepper (10) durch ein Joch (16) anbringbar ist, das mit dem vorderen Ende der Zugstange über zwei Stützglieder (20, 22) verbunden ist, die starr und unter Bildung eines rechten Winkels miteinander verbunden sind, von denen ein Stützglied (20) eine vertikale Schwenkverbindung (21) für das vordere Ende der Zugstange (12) aufweist und das andere Stützglied (22) kanalförmig ausgebildet ist, in dem vorderen Ende des Kanals das Joch (16) aufnimmt und für dieses eine horizontale Schwenkverbindung (23) aufweist, wobei die Universalkupplung (32) mit einer Zwischenwelle (74) verbunden ist, die mit einer weiteren Doppelkreuzgelenk-Universalkupplung (34) verbunden ist, die mit der sekundären Welle (30) verbunden ist, und wobei die Antriebswelle (26) in einem Lager (64) an der Zwischenwelle (74) unterstützt ist und das Lager (64) durch die Zugstange (12) unterstützt wird, und um die genannte vertikale Schwenkverbindung (21) schwenkbar ist.

3. Arbeitsgerät nach Anspruch 2, dadurch gekennzeichnet, daß das Lager (64) starr an einem Hebel angebracht ist und ein Kabel (70) zwischen dem Hebel (68) und dem Joch (16) so verbunden ist, daß es den Hebel durch die Hälfte des Winkels bewegt, durch den sich das Joch bewegt.

4. Arbeitsgerät nach irgendeinem der voranstehenden Ansprüche, dadurch gekennzeichnet, daß das Arbeitsgerät ein Mäh-Konditioniergerät (14) ist.

5. Kombination aus Schlepper und Gerät, dadurch gekennzeichnet, daß das Gerät in Übereinstimmung mit irgendeinem der voranstehenden Ansprüche ausgebildet ist.

**Revendications**

1. Machine comportant une barre d'attelage (12) pouvant être fixée à des barres de liaison (18) d'un tracteur (10) et comportant une transmission (26) servant à transmettre la puissance du tracteur à la machine et comprenant un arbre primaire d'entraînement avant (28) destiné à être raccordé au tracteur, un arbre secondaire d'entraînement arrière (30) destiné à être raccordé à la machine et un joint universel à croisillons doubles (32) installé entre ces arbres, caractérisé en ce que la barre d'attelage (12) peut être fixée au tracteur (10) au moyen d'un étrier (16), qui est raccordé à l'extrémité avant de la barre d'attelage par un couple de supports (20, 22) solidaires l'un de l'autre et perpendiculaires entre eux, un support (20) comportant un pivot vertical (21) de liaison à l'extrémité avant de la barre d'attelage (12) et l'autre support (22) étant réalisé en forme de profilé en U, recevant l'étrier (16) dans son extrémité ouverte et comportant un pivot horizontal (23) de liaison à l'étrier, que l'arbre primaire (28) est raccordé par un joint universel (52) à un premier arbre intermédiaire (40) raccordé à un joint universel à croisillons doubles (32), qui est raccordé à un arbre (54) raccordé à un autre joint universel à croisillons doubles (34) raccordé à un second arbre intermédiaire (46), qui est relié par un joint universel (56) à l'arbre secondaire (30), que la transmission (26) est supportée dans des paliers (38, 44) montés sur les arbres intermédiaires (40, 46) et que les paliers (38, 44) sont supportés respectivement par la barre d'attelage (12) et l'étrier (16).

2. Machine, qui comporte une barre d'attelage (12) pouvant être fixée à des barres de liaison (18) d'un tracteur (10) et comportant une transmission (26) servant à transmettre la puissance du tracteur à la machine et comprenant un arbre primaire d'entraînement avant (28) destiné à être raccordé au tracteur, un arbre secondaire d'entraînement arrière (30) destiné à être raccordé à la machine et un joint universel à croisillons doubles (32) installé entre ces arbres et raccordé à l'arbre primaire, caractérisé en ce que la barre d'attelage (12) peut être fixée au tracteur (10) au moyen d'un étrier (16), qui est raccordé à l'extrémité avant de la barre d'attelage par un couple de supports (20, 22) solidaires l'un de l'autre et perpendiculaires entre eux, un support (20) comportant un pivot vertical (21) de liaison à l'extrémité avant de la barre d'attelage (12) et l'autre support (22) étant réalisé en forme de profilé en U, recevant l'étrier (16) dans son extrémité ouverte et comportant un pivot horizontal (23) de liaison à l'étrier, que le joint universel (32) est raccordé à un arbre intermédiaire (74) raccordé à un autre joint universel à croisillons doubles (34), qui est raccordé à l'arbre secondaire (30), que la transmission (26) est supportée par un palier (64) au niveau de l'arbre intermédiaire (74) et que le palier (64) est supporté par la barre d'attelage (12) et pivote autour dudit pivot vertical de liaison (21).

3. Machine selon la revendication 2, caractérisée en ce que le palier (64) est fixé rigidement à un levier (68) et qu'un câble (70) est raccordé entre le levier (68) et l'étrier (16) de manière à déplacer le levier sur la moitié de l'angle, sur lequel se déplace l'étrier.

4. Machine selon l'une quelconque des revendications précédentes, caractérisée en ce que la machine est une faucheuse conditionneuse (14).

5. Ensemble combiné tracteur-machine, caractérisé en ce que la machine est réalisée conformément à l'une quelconque des revendications précédentes.

FIG. 1

FIG. 2

1

FIG.3

FIG.4

2

FIG. 5

FIG. 6